Europäisches Patentamt

European Patent Office

Office européen des brevets

(19)

(11) **EP 1 058 108 B1**

(12) **EUROPÄISCHE PATENTSCHRIFT**

(45) Veröffentlichungstag und Bekanntmachung des Hinweises auf die Patenterteilung:
**11.10.2006 Patentblatt 2006/41**

(51) Int Cl.:
*G01M 15/00* (2006.01)   *F02D 41/14* (2006.01)
*F02D 41/34* (2006.01)

(21) Anmeldenummer: **00890166.2**

(22) Anmeldetag: **24.05.2000**

(54) **Verfahren und Vorrichtung zur Diagnose bzw. Steuerung von Brennkraftmaschinen**

Method and apparatus for diagnosing and controlling an internal combustion engine

Méthode et appareil pour le diagnositic et la commande d'un moteur à combustion interne

(84) Benannte Vertragsstaaten:
**AT DE FR GB IT**

(30) Priorität: **31.05.1999 AT 37699 U**

(43) Veröffentlichungstag der Anmeldung:
**06.12.2000 Patentblatt 2000/49**

(73) Patentinhaber: **AVL List GmbH**
**8020 Graz (AT)**

(72) Erfinder:
• **Koegeler, Hans-Michael, Dr.**
**8010 Graz (AT)**
• **Harms, Klaus-Christoph, Dr.**
**8051 Graz (AT)**
• **Schneider, Richard, Dipl. Ing.**
**8020 Graz (AT)**
• **Wukisiewitsch, Wolfgang, Dipl. Ing.**
**8047 Graz (AT)**

(74) Vertreter: **Pinter, Rudolf et al**
**Patentanwälte**
**Klein, Pinter & Laminger OEG**
**Prinz-Eugen-Strasse 70**
**1040 Wien (AT)**

(56) Entgegenhaltungen:
**EP-A- 0 463 537        EP-A- 0 750 184**
**WO-A-93/22648         US-A- 4 697 561**

• **MAUER G F: "ON-LINE CYLINDER FAULT DIAGNOSTICS FOR INTERNAL COMBUSTION ENGINES" IEEE TRANSACTIONS ON INDUSTRIAL ELECTRONICS, IEEE INC. NEW YORK, US, Bd. 37, Nr. 3, 1. Juni 1990 (1990-06-01), Seiten 221-226, XP000138368 ISSN: 0278-0046**

**Beschreibung**

Die Erfindung betrifft ein Verfahren zur Diagnose von Brennkraftmaschinen, insbesonders von mehrzylindrigen Brennkraftmaschinen, wobei aus einer fortlaufenden Messung der kurbelwinkelabhängigen Drehgeschwindigkeit an einem Bauteil der Brennkraftmaschine modellgestützt der Energiepegelverlauf ermittelt und zur Einzelzylinder-Beurteilung herangezogen wird. Weiters betrifft die Erfindung auch ein Verfahren zur Steuerung von Brennkraftmaschinen, insbesonders zur on-board Steuerung von als Antriebsmotor in einem Kraftfahrzeug eingebauten Mehrzylinder-Brennkraftmaschinen unter Zuhilfenahme eines derartigen Diagnose-Verfahrens sowie auch eine Vorrichtung zur Diagnose von Brennkraftmaschinen, insbesonders von mehrzylindrigen Brennkraftmaschinen.

Diagnoseverfahren der angesprochenen Art sind beispielsweise aus AT 393 324 B, AT 396 842 B oder AT 755 U1 bekannt, wobei in allen Fälle dem sogenannten "Energiepegel" eine zentrale Rolle zukommt. Die folgenden Erläuterungen zum Energiepegel sind detaillierter in den genannten Schriften enthalten zur Vermeidung allzu ausführlicher Wiederholungen ist auf die dortigen Erklärungen zu verweisen, die integrierter Bestandteil der vorliegenden Anmeldung sein sollen.

Bei der sogenannten Energiepegelmethode ist vorgesehen, daß - jeweils für definierte Kurbelwinkelstellungen $\alpha$-

- an zumindest einem Bauteil (mit dem Index j) der Brennkraftmaschine die jeweilige momentane Drehzahl bzw. Winkelgeschwindigkeit $\omega_j(\alpha)$ gemessen wird,
- aus den konstruktiven Daten der rotierenden und oszillierenden Teile der Brennkraftmaschine zugehörige kurbelwinkelabhängige Ersatzträgheitsmomente $I(\alpha)$ ermittelt werden und
- nach der Beziehung $E_{gesamt} = E_{kin} + E_{pot}$ die jeweilige Gesamtenergie, die in der Brennkraftmaschine gespeichert ist, durch die gesamte kinetische Energie $E_{kin}$ angenähert wird, wobei $E_{kin}$ als $E(\alpha)$ nach der Beziehung

$$E(\alpha) = \sum_{j=1}^{n} \tfrac{1}{2} I_j(\alpha) \cdot \omega_j^2(\alpha) \qquad \textit{Gleichung 1}$$

ermittelt wird, und dass
- aus dem Vergleich dieser Gesamtenergien in zylinderspezifischen Kurbelwinkelbereichen die Einzelzylinder-Drehmomente bzw. -Leistungen bestimmt werden.

Eine entsprechende Einrichtung zur Diagnose von Brennkraftmaschinen ist demgemäss so ausgebildet, dass die Messanordnung mindestens eine Messeinheit zur fortlaufenden Messung der Drehzahl bzw. Winkelgeschwindigkeit $\omega(\alpha)$ an einem Bauteil der Brennkraftmaschine sowie eine damit in Verbindung stehende Zuordnungseinheit zur Zuordnung der jeweiligen Messergebnisse zu definierten Kurbelwinkelstellungen der Brennkraftmaschine aufweist, dass die Auswerteeinrichtung eine Speichereinheit aufweist, in der für die definierten Kurbelwinkelstellungen mindestens ein jeweiliges Ersatzträgheitsmoment $I(\alpha)$ der Brennkraftmaschine enthalten ist, dass die Auswerteeinrichtung weiters eine Verknüpfungseinheit umfasst, in der die jeweilige Gesamtenergie der Brennkraftmaschine ermittelt wird, und dass eine Vergleichseinheit in der Auswerteeinrichtung vorgesehen ist, in der aus dem Vergleich dieser Gesamtenergien in zylinderspezifischen Kurbelwinkelbereichen die Einzelzylinder-Drehmomente bzw. -Leistungen bestimmt werden. $I(\alpha)$ wird dabei ermittelt an Hand von Motordaten, die eingegeben werden, und wird unter Umständen zwischengespeichert.

Diese "Speichereinheit" für $I(\alpha)$ umfasst auch Lösungen, bei denen verschiedene weitere Signalaufnahme- bzw. Eingabemöglichkeiten vorgesehen sind, mit deren Hilfe beispielsweise in einer vorgeschalteten Verknüpfungseinheit $I(\alpha)$ ermittelbar ist. Über eine Eingabeeinheit können motortypspezifische Maschinendaten - insbesondere Werte für das Rotations-Trägheitsmoment $I_0$, die Pleuellänge $I$, den Kurbelradius $r$, die Masse der oszillierenden Teile eines Zylinders $m_{os}$ oder auch den Reibmitteldruck $p_r$ als Funktion der Schmieröltemperatur - eingegeben werden. In der Auswerteeinrichtung wird aus diesen Daten $I(\alpha)$ ermittelt und in der Speichereinheit für zumindest eine Periode zwischengespeichert. An Sensoren ist für dieses Verfahren nur erforderlich mindestens eine Messeinheit zur fortlaufenden Messung der Drehzahl bzw. Winkelgeschwindigkeit der Brennkraftmaschine. Wenn eine Zuordnung der Messergebnisse zu jedem einzelnen Zylinder erforderlich ist, so ist weiters eine Erkennungseinheit für ein im Zyklus der Brennkraftmaschine periodisch veränderliches Signal erforderlich, beispielsweise in bekannter Weise ein Nockenwellenmarkengeber, ein Zündspannungssignalgeber oder ein Nadelhubgeber am Einspritzsystem. Es wird bei dem bekannten Verfahren also davon ausgegangen, dass zur Einzelzylinder-Beurteilung hinsichtlich Drehmoment bzw. Leistung nur eine für die jeweiligen dynamischen Verhältnisse am Kurbeltrieb der Brennkraftmaschine relevante momentane Drehzahl bzw. Winkelgeschwindigkeit $\omega(\alpha)$ in Abhängigkeit von der Kurbelwinkelstellung $\alpha$ der Brennkraftmaschine abgenommen zu werden und mit dem wiederum auf den Kurbelwinkel bezogenen jeweiligen Gesamtträgheitsmoment $I(\alpha)$ zur jeweiligen

gesamten, in der Maschine gespeicherten, kinetischen Energie verknüpft zu werden braucht. In zylinderspezifischen Kurbelwinkelbereichen der über dem Kurbelwinkel aufgetragenen Gesamtenergie kann diese dann ohne weiteres den einzelnen hauptverursachenden Zylindern zugeordnet werden, sodass durch entsprechende Vergleiche die Charakteristiken der Einzelzylinder ermittelbar sind.

An konstanten, motortypspezifischen Werten muss nur das Trägheitsmoment aller rotierenden Maschinenteile (reduziert auf die Kurbelwellendrehzahl), das Schubstangenverhältnis (Pleuelstangenlänge und Hub) sowie die Summe der oszillierenden Massen pro Zylinder bekannt sein. Grundsätzlich ist das Verfahren bzw. die entsprechende Einrichtung für die Einzelzylinder-Beurteilung im Vollasthochlauf (Vollgasbeschleunigung in einem bestimmten Drehzahlbereich, vorzugsweise (aber nicht notwendigerweise) ohne äußere Belastung der Brennkraftmaschine) gedacht; aufgrund der hohen Genauigkeit - insbesonders im niederen Drehzahlbereich - ist es etwa ohne weiteres auch möglich, die Unterschiede zwischen den Zylindern im Leerlauf zu diagnostizieren. Grundsätzlich ist es darüber hinaus auch möglich während des Motorauslaufes das mechanische Verlustmoment des Motors zu bestimmen bzw. weiters auch während des Vollasthochlaufes den Verlauf des inneren Einzelzylinder-Drehmoments zu ermitteln.

Nachteilig bei den angesprochenen bekannten Verfahren, bzw. bei den entsprechenden Vorrichtungen, ist insbesondere der Umstand, dass lediglich ein Kennwert für den Einzelzylinderdrehmomentbeitrag bereitgestellt wird, nämlich ein pe*j, das ist der "gemischte effektive Mitteldruck für Zylinder j". Bei Rückschluss auf die eingespritzte Kraftstoffmenge wird dabei näherungsweise angenommen, dass sich die Einzelzylindergaskraftdrehmomentenverläufe nur im Bereich vom (Zünd OT) bis (Zünd OT + Zündabstand) nennenswert unterschieden und sonst gleich waren.

Das stellt für Motoren mit mehr als 4 Zylinder eine zunehmend große Ungenauigkeit dar. Beispielsweise werden bei einem 8 Zylinder-4-Takt-Motor Unterschiede nur in der ersten Hälfte des Arbeitstaktes angenommen. Das ist von der Bedeutung her auch vollkommen richtig, aber ein Arbeitstakt, der in der ersten Hälfte beispielsweise schwächer ist, wird auch in der zweiten Hälfte - wenn auch in geringerem Ausmaß als im ersten Teil - schwächer sein als der Arbeitstakt in der zweiten Hälfte eines durchschnittlich arbeitenden Zylinders.

Dies führt besonders bei vielzylindrigen Motoren zu einer beschränkten Genauigkeit des Rückschlusses vom gemischten effektiven Mitteldruck pe*j auf das abgegebene Einzelzylindergaskraftdrehmoment. Auch wurde zur Ermittlung von pe*j die Gleichheit der Kompressionsarbeiten vorausgesetzt (was zwar ebenfalls eine gute Näherung darstellt), allerdings ohne Kenntnis über deren absolute Höhe bereitzustellen.

Im Fall der stationär unter Last laufenden Maschine stellt der eine bereitgestellte Kennwert für den Einzelzylindsrdrshmomentenbeitrag genau genommen nur die Abweichung Δpe*j des Einzelzylinderdrehmomentbeitrages vom zunächst unbekannten mittleren Durchschnittsdrehmoment aller Zylinder dar. Hierzu ist in WO 92/22648 dargestellt, wie aus dem Energiepegelverlauf das mittlere Lastmoment mit Hilfe einer Ordnungsanalyse bestimmt werden kann. Gerade das mittlere Motordrehmoment, und zwar in möglichst hoher Genauigkeit, ist in Verbindung mit der On-Board-Anwendung eine zunehmend wichtige Kenngröße. Bei sogenannten "momentengeführten Motorsteuerungssystemen" werden sehr viele Parameter in Kennfeldern, also als Werte in Abhängigkeit von der Drehzahl und einem Lastmaß, abgelegt. Die Erfassung des tatsächlich abgegebenen Drehmomentes wäre dabei wesentlich. Demgegenüber wird das Lastmaß häufig mit Hilfe einer langen Kette von mühsam zu applizierenden Kennfeldern (beim Ottomotor beispielsweise als Funktion von Luftmasse, Lambda, Zündzeitpunkt, Temperaturen und anderen Größen) bestimmt. Man wünscht sich hierbei eine Genauigkeitssteigerung.

Aufgabe der gegenständlichen Erfindung ist es daher, die Verfahren und Vorrichtungen der eingangs genannten Art so zu verbessern, dass die erwähnten Nachteile von bekannten Verfahren und Vorrichtungen vermieden werden und dass insbesonders das absolute Einzelzylinderdrehmoment und das mittlere Motorlastmoment bereitgestellt werden. Das mittlere Motorlastmoment soll dabei nach Möglichkeit getrennt in zwei Varianten erfasst werden können, und zwar einerseits das an der Kurbelwelle bereitgestellte effektive Motordrehmoment Me und andererseits das innere Motordrehmoment Mi, das als Ergebnis der eingespritzten Kraftstoffmenge und dem Wirkungsgrad der Verbrennung gesehen werden kann.

Dabei müssen auch Störgrößen wie die Rückwirkungen vom Antriebsstrang und die Torsionsschwingungseinflüsse im Kurbeltrieb sowie die Massenkraftwirkungen möglichst gut und in praktikabel einfacher Art und Weise berücksichtigt werden, um die gesuchten Größen in der erforderlichen Genauigkeit im gesamten Motorkennfeld sowohl bei stationärem als auch im dynamischen Betrieb bereitstellen zu können.

Diese Aufgabe wird bei einem Verfahren der eingangs genannten Art gemäß der vorliegenden Erfindung dadurch gelöst, dass aus zumindest einem Einzelzylinder-Momentverlauf (bzw. dem Verlauf einer damit verknüpften Kenngröße) der Gesamt-Gaskraftdreh-momentverlauf (bzw. der Verlauf einer damit verknüpfen Kenngröße) als Funktion zylinderspezifischer Parameter zumindest näherungsweise über einen bestimmten Kurbelwinkel(oder Zeit)bereich modelliert und unter Variation zumindest eines Teils der zylinderspezifischen Parameter dem Verlauf des aus dem Energiepegelverlauf ermittelten Energiepegelmomentes (bzw. dem Verlauf einer damit verknüpften Kenngröße) in diesem Bereich angepasst wird, und dass mit Hilfe der aus dieser Anpassung erhaltenen zylinderspezifischen Parameter der der Modellierung zugrundegelegte Einzeizylinder-Momentverlauf korrigiert und zur Einzelzylinder-Beurteilung herangezogen wird. Es wird damit also möglich, beispielsweise aus einem Einzelzylinder-Gasdruckverlauf, zusammen mit der bekannten Kurbelgeometrie, einen Einzelzylinder-Gasmomentverlauf als Funktion zylinderspezifischer Parameter herzunehmen und daraus den Summen-Gaskraftdrehmomentverlauf als Funktion dieser einzelzylinder-spezifischen Parameter zusammenzusetzen. Dieser Verlauf, der entweder auf eine Bezugsgröße (beispielsweise ein Spitzenwert oder ein mittlerer Wert des Verlaufs) normiert oder aber ohne Rücksicht auf Absolutwerte nur relativ bestimmt vorliegen kann, kann dann unter Variation von zylinderspezifischen Streckungsparametern im jeweils betrachteten Kurbelwinkel- oder Zeitbereich in den Verlauf des aus dem Energiepegelverlauf ermittelten Energiepegelmomentes bzw. den Verlauf einer damit verknüpfen Kenngröße eingepasst werden, was im wesentlichen einer "Entfaltung" des Energiepegelmomentverlaufes in seine Summanden entspricht. Die einzelnen ermittelten zylinderspezifischen Parameter können sodann zur Korrektur des jeweils der Modellierung zugrundegelegten Einzelzylinder-Momentverlaufes verwendet werden, womit sich für die jeweils beteiligten Einzelzylinder Kenngrößen ergeben, die zu deren Beurteilung herangezogen werden können. Es ist also unter Heranziehung zumindest eines Einzelzylinder-Momentverlaufes (bzw. eines Einzelzylinder-Gasdruckverlaufes oder dergleichen) eine wesentliche Verbesserung der eingangs besprochenen Energiepegelmethode möglich, die noch detailliertere und konkretere Aussagen zur Einzelzylinder-Beurteilung ermöglicht.

Gemäß einer bevorzugten Ausgestaltung der Erfindung ist vorgesehen, dass der Einzelzylinder-Momentverlauf ohne weitere Messung an der jeweiligen Brennkraftmaschine mit Hilfe bekannter Methoden (z.B. einfache Simulation der polytropen Kompression und der Verbrennung) geschätzt bzw. aus Daten der Motorentwicklung modelliert wird. Auch dies ermöglicht bereits eine deutliche und vorteilhafte Verbesserung der Aussagekraft der eingangs besprochenen Energiepegelmethode, da auch damit bereits eine "Entfaltung" des Energiepegelmomentverlaufes bzw. eine verbesserte Zuordnung zu den Einzelzylinder-Beiträgen möglich wird.

Nach einer anderen bevorzugten Ausgestaltung der Erfindung ist aber vorgesehen, dass der Einzelzylinder-Momentverlauf aus einem an der jeweiligen Brennkraftmaschine, vorzugsweise an einem einzelnen Zylinder, aufgenommenen Einzelzylinder-Brennraum-druckverlauf, bzw. dem Verlauf einer dazu proportionalen Größe, unter Einbeziehung der Kurbelgeometrie ermittelt wird. Damit können die Gegebenheiten der jeweiligen Brennkraftmaschine besser berücksichtigt werden, wobei aus der Messung an einem einzelnen Zylinder üblicherweise ohne weiteres auf eine zumindest weitgehend gleiche Form der Druck- bzw. Momentenverläufe der anderen Einzelzylinder geschlossen werden kann. Diese gemessenen Einzelzylinder-Verläufe berücksichtigen in vorteilhafter Weise den jeweiligen Betriebszustand der Brennkraftmaschine und ähnliche durchaus signifikante Gegebenheiten, sodass gegenüber der vorher besprochenen Schätzung bzw. Modellierung aus Daten der Motorentwicklung weitere Genauigkeitssteigerungen bei der Einzelzylinder-Beurteilung möglich sind.

Nach einer besonders bevorzugten Weiterbildung der Erfindung ist vorgesehen, dass das Energiepegelmoment einerseits aus der Ableitung des Energiepegelverlaufs und andererseits als Funktion des mittleren effektiven Lastmomentes C, des Gaskraftdrehmomentes $M_{Gas}$ im Ansaug- und Auspufftakt und eines Reibmomentes modelliert wird, wobei in einem bestimmten Kurbelwinkelbereich durch Variation von mindestens einem der Modellparameter an den für diesen Bereich ermittelten Verlauf des Energiepegelmomentes bestmöglich angepasst wird. Dies bedeutet im wesentlichen, dass der Einzelzylinder-Momentverlauf durch die Summe über mindestens einen Term, deren jeder aus einem zweckmäßigerweise normierten Verlauf eines spezifischen Momentenbeitrags und einem Streckungsfaktor besteht, modelliert wird, beispielsweise als

$$M_{Gasj}(\alpha) = K_j \cdot f_K(\alpha) + V_j \cdot f_V(\alpha + \Delta\alpha_j) + A_j \cdot f_A(\alpha) + S_j \cdot f_s(\alpha) \quad \textit{Gleichung 2}$$

wobei die verwendeten Symbole folgendes bedeuten:

$M_{Gasj}$     Gaskraft-Drehmomentverlauf des betrachteten Zylinders j
$\alpha$     Bezugskurbelwinkel der Brennkraftmaschine
$K_j$     Kompressionsfaktor (maximales Kompressionsmoment) für Zylinder j
$f_K$     normierter Kompressions- und Expansionsmomentverlauf bei ungefeuerter Maschine
$V_j$     Verbrennungsfaktor für Zylinder j
$f_V$     normierter Verbrennungsmomentenverlauf
$\Delta\alpha_j$     zylinderindividuelle Verschiebung des Verlaufes $f_V$
$A_j$     Ausschiebefaktor für Zylinder j
$f_A$     normierter Ausschiebemomentenverlauf
$S_j$     Saugfaktor für Zylinder j
$f_s$     normierter Saugmomentenverlauf

Diese Einzelzylinder-Gasmomente der einzelnen Zylinder des Motors können in einer Drehmomentbilanz berücksichtigt werden, die für eine Vielzahl von Kurbelwinkelwerten im betrachteten Kurbelwinkelintervall, das sich vorzugsweise von (Zünd-OT + Zündabstand - Zykluslänge) bis (Zünd-OT + Zündabstand) erstreckt, mit ein und dem selben Satz von Einpassparametern (beispielsweise $K_j$, $V_j$, $\Delta\alpha_j$, $A_j$, $S_j$, C und R) bestmöglich erfüllt sein muss. Der Einpassvorgang selbst erfolgt z.B. mit Hilfe der Methode der kleinsten Fehlerquadrate.

Die angesprochene Drehmomentbilanz steht im Zusammenhang mit dem Energiepegel $E(\alpha)$ nach Gleichung 1. Es kann nämlich ein "Energiepegelmoment" $M_E$ definiert werden als Ableitung des Energiepegels $E(\alpha)$ nach dem Kurbelwinkel $\alpha$:

$$M_E = \frac{dE}{d\alpha} \qquad \textit{Gleichung 3}$$

Dieses Energiepegelmoment kann direkt aus dem gemessenen $\omega$-Verlauf (bzw. den gemessenen Verläufen) unter Berücksichtigung des Massenkrafteinflusses und des Torsionsschwingungseinflusses (wie in EP 0750184 A2 beschrieben) errechnet und zur Modellierung der Drehmomentbilanz verwendet werden:

$$M_E = \sum_{j=1}^{z} M_{Gasj} - C + R \cdot f_R \quad \textit{Gleichung 4}$$

wobei die verwendeten Symbole folgendes bedeuten:

j     laufender Index der Zylindernummer von 1 bis z
z     Zylinderanzahl
C     mittleres effektives Lastmoment, das Nebenantriebe und Hauptlast der Verbrennungskraftmaschine abdeckt
R     Reibungsfaktor
$f_R$     normierter Kolbenreibmomentenverlauf.

Dabei kann der normierte Kolbenreibmomentenverlauf $f_R$ näherungsweise proportional zur Summe über die quadrierten Kolbengeschwindigkeiten der einzelnen Zylinder angesetzt werden:

$$f_R = -\frac{1}{Max} \sum_{j=1}^{z} x'^2_j$$

wobei hier auf den maximal auftretenden Reibwert normiert wurde:

$$Max = Maximalwert\left( \sum_{j=1}^{z} x'^2_j(\alpha) \right)$$

und die Größe $x'_j$ die dimensionslose Kolbengeschwindigkeit als Funktion der phasenrichtig auf den Zylinder j bezogenen Kurbelwinkellage $\alpha$ darstellt.

Vorzugsweise werden die im Modell der Drehmomentbilanz enthaltenen Streckungsfaktoren, beispielsweise $K_j$, $V_j$, $A_j$, S, R und C, in der Einheit für Drehmomente, in Nm, angegeben, während die zugehörigen Momentverläufe normiert und daher dimensionslos sind. Die Einpassparameter $\Delta\alpha j$, das sind die zylinderindividuellen Verschiebungen des normierten Verbrennungsmomentenverlaufes $f_V$, haben die Dimension eines Kurbelwinkels.

Aufgrund der großen Anzahl von einzupassenden Parametern - z.B. bei 8 Zylinder wären das 42 Werte -, die nicht nur den Rechenaufwand erhöhen, sondern letztenendes auch die Genauigkeit dieses damit zu "weichen" Modells wieder senken, ist nach berechtigten vereinfachenden Annahmen zu suchen, und auch nach Abhängigkeiten einzelner Streckungsfaktoren von anderen Größen, die üblicherweise gemessen und damit von vornherein bekannt sind. Grundsätzlich sind hier - abhängig vom jeweiligen Anwendungsfall - verschiedene Ansätze möglich.

In einer besonders bevorzugten Ausführungsform werden für den Einpassvorgang die folgenden vereinfachenden Annahmen getroffen:

$A_j$    $A_j = A$, gleicher Wert für alle Zylinder, soll als Wert in einem Kennfeld und / oder als Funktion des Ladedruckes vorgegeben sein.

$S_j$    $S_j = S$, gleicher Wert für alle Zylinder, als Funktion des Ladedruckes festgelegt und vorgegeben.

$K_j$    als Ausgangswert gleich für alle Zylinder: $K_j = K$; könnte auch als Funktion des aktuellen Ladedruckes oder in einem Kennfeld vorgegeben sein.

$\Delta\alpha_j$    als Ausgangswert gleich für alle Zylinder: $\Delta\alpha_j = \Delta\alpha$; sinnvolle Ausgangswerte können in einem Kennfeld abhängig von Drehzahl, Lastmaß und Zündzeitpunkt abgelegt sein.

R    prinzipiell abhängig von der Ölzähigkeit und damit von der Öltemperatur sowie von Drehzahl und Lastmaß.

Damit verbleiben als wirklich einzupassende Parameter: $K_j$, $\Delta\alpha_j$, C und R (das sind z.B. 26 Werte bei einem 8-Zylindermotor). Zur weiteren Vereinfachung können auch K, $\Delta\alpha$ und R fest vorgegeben werden. Damit verbleiben z.B. nur mehr 9 Werte bei einem 8-Zylindermotor. In diesem Fall sind das eigentliche Messrechenergebnis die Streckungsfaktoren für den normierten Verbrennungsmomentenverlauf sowie der Wert C als mittleres effektives Motordrehmoment im letzten Motorzyklus, angebbar direkt in Nm.

Da mit $V_j$ und den anderen Vorgaben jeder einzelne Gaskraftdrehmomentenverlauf definiert ist, kann auch ein echter pi-Wert ($p_{i,j}$) bzw. der Arbeitsanteil der Hochdruckschleife, direkt errechnet werden:

$$p_{i,j} = \frac{1}{Vh} \int_{-539}^{180} M_{Gas,j} \cdot d\alpha$$

bzw.

$$p_{ih,j} = \frac{1}{Vh} \cdot \int_{0}^{180} V_j \cdot f_{V(\alpha+\Delta\alpha)} \cdot d\alpha = V_j \cdot \int_{0}^{180} \frac{f_{V(\alpha+\Delta\alpha)} \cdot d\alpha}{Vh}$$

$p_{ih,j}$ ist direkt proportional der Einspritzmenge mal Verbrennungswirkungsgrad und damit bestens geeignet, den "Istwert" für die Regelung von Einzelzylindereinspritzmengen darzustellen.

Ebenso kann das mittlere innere Motordrehmoment Mi aus dem letzten Motorzyklus errechnet werden, was besonders dann sinnvoll ist, wenn R nicht vorgegeben, sondern tatsächlich eingepasst wurde:

$$Mi = \frac{Vh}{4\pi} \cdot \frac{1}{z} \sum_{j=1}^{z} p_{i,j}$$

Damit könnten jeweils ab einem Kurbelwinkel ($OT_j$ + Zündabstand) - sinnvollerweise maximal ab ($OT_j$ + 180°) - neue Werte für $V_j$ und für C, gemittelt über den gesamten vorangegangenen Motorzyklus, berechnet und ebenso das innere Motordrehmoment Mi ermittelt werden.

Als unmittelbare konstruktive Ausgestaltung dieser Ausbildung der Erfindung wird an eine Sensoreinheit gedacht, die mit einer entsprechenden Mess- und Echtzeitrecheneinheit ausgestattet ist, mit hoher Datenrate den Energiepegelverlauf ermittelt und mit niedriger Datenrate die oben beschriebenen Resultatwerte an ein Motor- oder Antriebsstrangmanagementsystem weiterleitet und damit "Istwerte" für entsprechende Regelvorgänge oder Diagnosevorgänge bereitstellt.

Dabei ist wesentlich, dass keinerlei Einschränkungen für stationären oder instationären Betrieb getroffen wurden. Besonders vorteilhaft ist dabei, dass gewisse Betriebsparameter des Managementsystems (z.B. Ladedruck, Öltemperatur, Sollwert für den Zündzeitpunkt oder erwartetes inneres Drehmoment Mi) der ausgelagerten Sensor-Meß- und Recheneinheit laufend bekannt gegeben werden können, sodass die vorzugebenden Parameter gut ermittelt werden können.

Ein wesentlicher Vorteil dieses Verfahrens besteht in der Robustheit der Messergebnisse gegenüber hochfrequenten Torsionsschwingungen (Kurbelwellentorsionsschwingungen) oder hochfrequenten Messfehlern aller Art: Durch die strenge Vorgabe plausibler Verläufe ergibt sich die erwünschte Filterwirkung mit sozusagen Tiefpass-Charakteristik.

Daher sinkt für ein bestimmtes Genauigkeitsziel der messtechnische Aufwand. Das ist wiederum wesentlich bei der Verwendung preiswerter On-Board-Sensorik.

Zur Berücksichtigung des Einflusses von niederfrequenten Torsionsschwingungen speziell im Antriebstrang kann in weiterer Ausgestaltung des erfindungsgemäßen Verfahrens noch vorgesehen sein, dass abtriebsseitig eine weitere kurbelwinkelabhängige Drehgeschwindigkeit an einem elastisch mit dem einen Bauteil verbundenen weiteren Bauteil der Brennkraftmaschine ermittelt, bzw. eine separate, kurbelwinkelabhängige Momentmessung abtriebsseitig am Kurbeltrieb vorgenommen, und bei der Bestimmung des Energiepegelverlaufes berücksichtigt wird. Diese Verbesserungen der grundsätzlichen Energiepegelmethode sind beispielsweise auch in den eingangs angesprochenen Schriften (z.B. auch EP 0750184 A2) betreffend die Energiepegelmethode bereits enthalten und ermöglichen im vorliegenden Zusammenhang eine sehr vorteilhafte Verbesserung der Einzelzylinder-Beurteilung speziell im realistischen, dynamischen Betrieb der Brennkraftmaschine, bzw. auf schlechten Straßen, wo Rückwirkungen des Antriebstranges die Winkelgeschwindigkeitsmessung störend beeinflussen.

Beim erfindungsgemäßen Verfahren zur Steuerung von Brennkraftmaschinen, insbesonders zur on-board Steuerung von als Antriebsmotor in einem Kraftfahrzeug eingebauten Mehrzylinder-Brennkraftmaschinen, werden mit den mittels eines Verfahrens der beschriebenen Art erhaltenen Parametern Kenngrößen zur Einzelzylinder-Beurteilung ermittelt und an eine on-board Motorsteuerung übertragen. Es ist damit also möglich, die aus dem in verschiedenen Ausgestaltungen beschriebenen Diagnoseverfahren erhaltenen zylinderspezifischen Parameter bzw. den damit errechneten Einzelzylinder-Momentverlauf oder diesem zuordenbare Größen (wie die beschriebenen Maximalwerte, Schwerpunktlagen und dergleichen) unmittelbar zur Motorsteuerung on-board zu verwenden, beispielsweise um über die Motorsteuerung (ECU) die Einspritzmenge, den Zündzeitpunkt und dergleichen für die einzelnen Zylinder in Abhängigkeit von deren Beurteilung zu verändern.

Im letztgenannten Zusammenhang besonders vorteilhaft ist eine weitere Ausgestaltung der Erfindung, gemäß welcher die Aufnahme bzw. Ermittlung der Drehgeschwindigkeit(en) und gegebenenfalls des Einzelzylinder-Brennraumdruckverlaufes bzw. des Verlaufes einer dazu proportionalen Größe unabhängig von der oder nur parametriert durch die Motorsteuerung zeitlich hochaufgelöst erfolgt, wogegen die Übertragung der so ermittelten Messgrößen an die Motorsteuerung mit niedrigerer Datenrate erfolgt. Damit kann auf sehr einfache Weise dem Umstand Rechnung getragen werden, dass für eine Verbesserung der Signifikanz der Einzelzylinder-Beurteilungen gemäß der Erfindung eine zeitlich hochaufgelöste Messung und Auswertung der für die Ermittlung des Energiepegelverlaufes herangezogenen Drehgeschwindigkeitsmessung(en) vorteilhaft ist, wogegen üblicherweise die in Kraftfahrzeugen verwendeten Motorsteuerungen (ECU) nur niedrigere Datenraten verarbeiten können bzw. brauchen.

Bei einer erfindungsgemäßen Vorrichtung zur Diagnose von Brennkraftmaschinen, insbesonders von mehrzylindrigen Brennkraftmaschinen, mit zumindest einer Messeinheit zur fortlaufenden Messung der kurbelwinkelabhängigen Drehgeschwindigkeit an zumindest einem Bauteil der Brennkraftmaschine, einer Bereitstellungseinheit zur Bereitstellung eines parameterabhängigen Einzelzylinder-Momentverlaufes, und einer Auswerteeinheit zur modellgestützten Ermittlung des Energiepegelverlaufes aus der (den) gemessenen Drehgeschwindigkeit(en) sowie zur Anpassung des aus den Einzelzylinder-Momentverläufen zusammengesetzten Gesamt-Gaskraftdrehmomentverlaufes unter Variation der Parameter an den Verlauf des Energiepegelmomentes, werden die aus dieser Anpassung resultierenden Parameter oder die mit Hilfe dieser Parameter korrigierten Einzelzylinder-Momente von der Auswerteeinheit als Einzelzylinder-Diagnosegrößen angezeigt oder bereitgestellt. Die Bereitstellungseinheit ist dabei bevorzugt mit einer Sensoreinheit zur direkten Ermittlung des Brennraumdruckverlaufes bzw. des Verlaufes einer dazu proportionalen Größe zumindest eines Zylinders der jeweiligen Brennkraftmaschine verbunden. Die Sensoreinheit kann bevorzugt mit der (den) Messeinheit(en) für die Drehgeschwindigkeit(en) verbunden sein und zumindest einen Teil der Auswerteelektronik der Auswerteeinheit umfassen, womit ein sogenannter "intelligenter Sensor" geschaffen ist, der in vorteilhafter Weise an oder in der Nähe der Brennkraftmaschine angebracht werden kann und dort beispielsweise auch die obenstehend besprochene Umwandlung der hohen Datenrate der Drehgeschwindigkeitsmessung(en) auf die niedrigere Datenrate zur Übertragung der Messgrößen an die Motorsteuerung erledigt.

Die Erfindung wird im folgenden noch anhand der in der Zeichnung teilweise schematisch dargestellten Ausführungsbeispiele bzw. Diagramme näher erläutert.

Fig. 1a zeigt dabei den an einem Einzylinder-Viertakt-Motor gemessen Winkelgeschwindigkeitsverlauf Omega (ω) des Schwungrades, der mit weißem Rauschen überlagert ist und später numerisch geglättet wurde, über einem Kurbelwinkelbereich von -540 bis 180 Grad.

Fig. 1b zeigt den zugehörigen Verlauf des winkelabhängigen Gesamtträgheitsmomentes I_alpha.

Fig. 1c zeigt den in bekannter Weise aus den in Fig. 1a und 1b gezeigten Verläufen berechneten Energiepegelverlauf.

Fig. 1d zeigt schließlich das Einpassergebnis des aus normierten Kurvenverläufen und Streckungsfaktoren linear zusammengesetzten und um die mittlere Motorlast und den Motorreibverlauf herabgesetzten Gaskraftdrehmomentenverlaufes ("M_Gas_minus_C_plus_R_fR") in den Verlauf der Ableitung des Energiepegelverlaufes nach dem Kurbelwinkel ("dE_d_alpha_Messung").

Weiters sind die eingepassten Streckungsfaktoren C, R, A, S, K und V jeweils in Nm angegeben. $\Delta\alpha$ ergab bei 0 Grad ein minimales Fehlerquadrat.

Fig. 2a zeigt den zugehörigen gemessenen Zylinderdruckverlauf ("p1") und den daraus resultierenden Gaskraftdrehmomentenverlauf ("M_Gas"). Zum Vergleich der Größenordnungen wird zusätzlich der in Fig. 1d dargestellte verschobene Verlauf "M_Gas_minus_C_plus_R_fR" gezeigt.

Fig. 2b bis Fig. 2f zeigen die normierten Drehmomentverläufe fA, fs, FK, fV und fR. Diese Verläufe werden einmalig pro Motortyp aus gemessenen Druckverläufen bestimmt und abgespeichert. Es hat sich gezeigt, dass - bei Verwendung des Verschiebungsparameters $\Delta\alpha$ - im gesamten Motorkennfeld mit guter Näherung mit einem Satz dieser normierten Drehmomentverläufe das Auslangen gefunden werden kann.

In den Fig. 3 und 4 wird der in den Fig. 1 und 2 am Beispiel des Einzylindermotors gezeigte Einpassvorgang für einen 8 Zylindermotor erläutert.

Fig. 5 zeigt beispielhaft eine bevorzugte Ausgestaltung einer erfindungsgemäßen Vorrichtung.

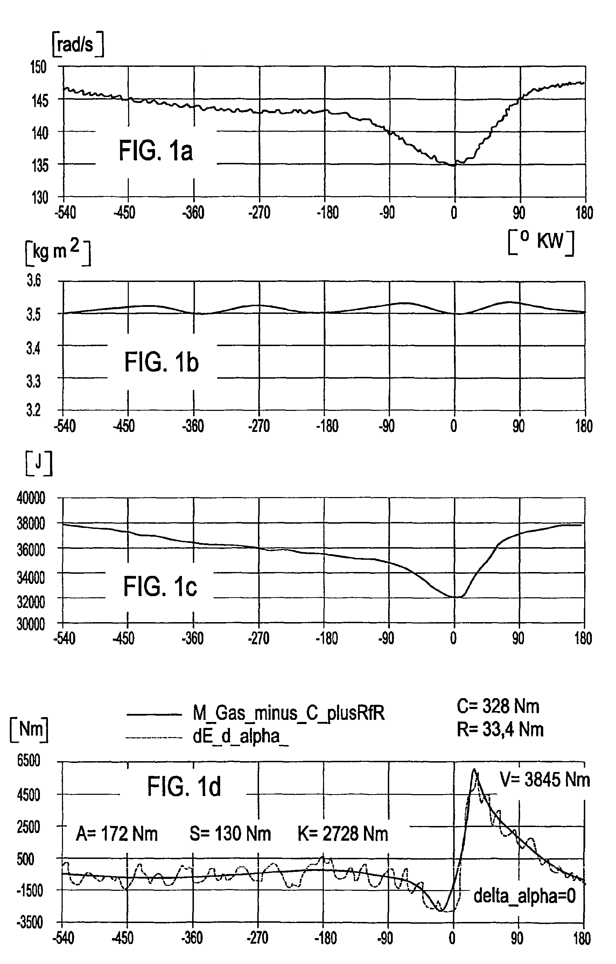

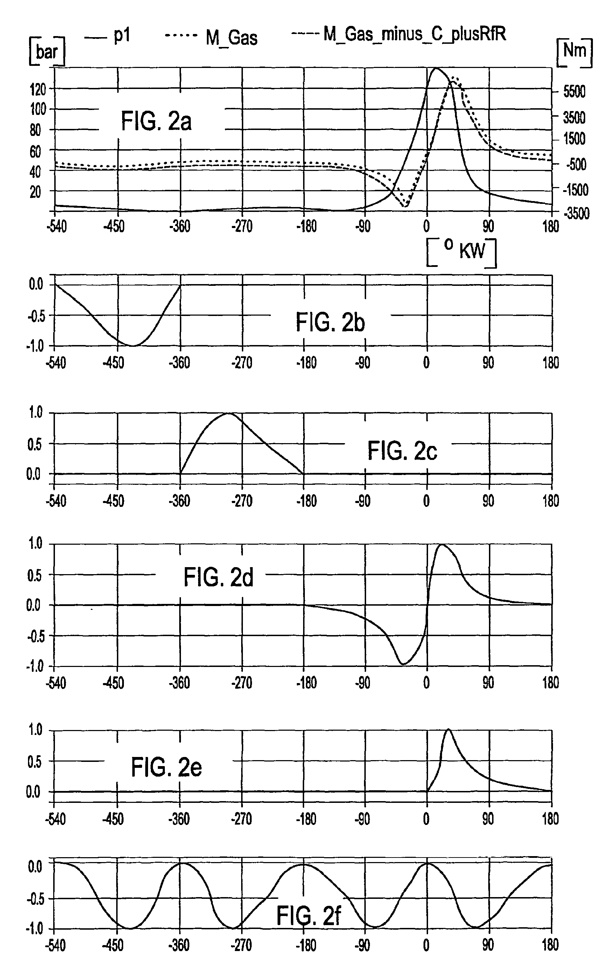

Zunächst zum Einzylindermotor (bzw. Fig. 1a bis 2f):

Gemäß Gleichung 4 zur Darstellung des prinzipiellen Einpassvorganges sei der Einfachheit halber angenommen, dass nur zwei Parameter, z.B. C und V, eingepasst werden - der Rest sei vorgegeben. Somit werden in Gleichung 4 (mit Hilfe von Gl. 2) zunächst alle bekannten Teile auf die linke Seite geschrieben und jene, die als Funktion der einzupassenden Parameter dargestellt werden, auf die rechte Seite:

$$\underbrace{M_E - A\cdot f_A - S\cdot f_S - K\cdot f_K - R\cdot f_R}_{Y} = \underbrace{V\cdot f_{V(\alpha+\alpha\Delta)} - C}_{\bar{Y}} \qquad \text{Gleichung 5}$$

Diese Gleichung kann für viele Messpunkte bei unterschiedlichen Kurbelwinkellagen a angeschrieben werden: Im gezeigten Beispiel bei einer Messauflösung von 1 Grad Kurbelwinkel also 720 mal pro Motorzyklus. Da sowohl die linke Seite von Gl. 5, mit $Y$ bezeichnet, durch Messfehler und Näherungen verfälscht ist, als auch die rechte Seite, mit $\bar{Y}$ bezeichnet, durch Näherungsannahmen vereinfachter Modelle, wird wohl in den meisten Fällen keine einzige dieser 720 Gleichungen exakt erfüllt sein. Im statistischen Durchschnitt aber wird beispielsweise die Summe der Fehlerquadrate (S) minimal werden, wenn die Parameter V und C, die die rechte Seite $\bar{Y}$ von Gleichung 5 bestimmen, bestmöglich gewählt sind:

$$S = \sum_{\alpha=\alpha_0}^{\alpha_{OT}} \left(Y_{(\alpha)} - \bar{Y}_{(\alpha)}\right)^2 \to \mathbf{Min}$$

Die Lösung dieser Problemstellung erfolgt in bekannter Weise durch Nullsetzen der partiellen Ableitungen $\dfrac{\delta S}{\delta V}$ und $\dfrac{\delta S}{\delta C}$, womit sich zwei lineare Gleichungen für die beiden gesuchten Parameter V und C ergeben.

Beim Einpassen von mehr als 2 (z.B. n) Parametern, ändert sich an der grundsätzlichen Vorgangsweise nichts. Man erhält lediglich n lineare Gleichungen für n gesuchte Parameter, die dann mit den Methoden der linearen Algebra gelöst werden können.

Wesentlich ist, dass je nach gewählter Einpassstrategie feste Lösungsformeln für die einzelnen Parameter ermittelt werden können, die im wesentlichen aus Summen, Produkten und Divisionen bestehen, die sich sehr gut in entsprechend leistungsfähigen Recheneinheiten (Signalprozessoren) in Echtzeit berechnen lassen.

Im gewählten Beispiel kann unmittelbar nach dem Erreichen von $\alpha$ = 180 Grad die folgende Auswertung durchgeführt werden:

$$C = \dfrac{\displaystyle\sum_{\alpha=-539}^{180} Y_{(\alpha)} \cdot \sum_{\alpha=-539}^{180} f_{(\alpha)}^2 - \sum_{\alpha=-539}^{180} Y_{(\alpha)}\cdot fV(\alpha) \cdot \sum_{\alpha=-539}^{180} f_{V(\alpha)}}{\left(\displaystyle\sum_{\alpha=-539}^{180} f_{V(\alpha)}\right)^2 - 720\cdot \displaystyle\sum_{\alpha=-539}^{180} f_{V(\alpha)}}$$

$$V = \frac{\sum\limits_{\alpha=-539}^{180} y_{(\alpha)} + 720 \cdot C}{\sum\limits_{\alpha=-539}^{180} f_{V(\alpha)}}$$

Die so erhaltenen Werte V und C können unmittelbar darauf dem übergeordneten Steuergerät zur Verfügung gestellt werden.

Die Länge des Betrachtungsintervalles muss sich nicht unbedingt über den gesamten Motorzyklus erstrecken. Wesentlich ist, dass die Parameter der einzelnen Zylinder dort variiert und eingepasst werden, wo der Einzelzylindergaskraftmomentenverlauf einen bedeutenden Einfluss auf den Summengaskraftmomentenverlauf, und damit auf den ermittelbaren Energiepegelverlauf hat.

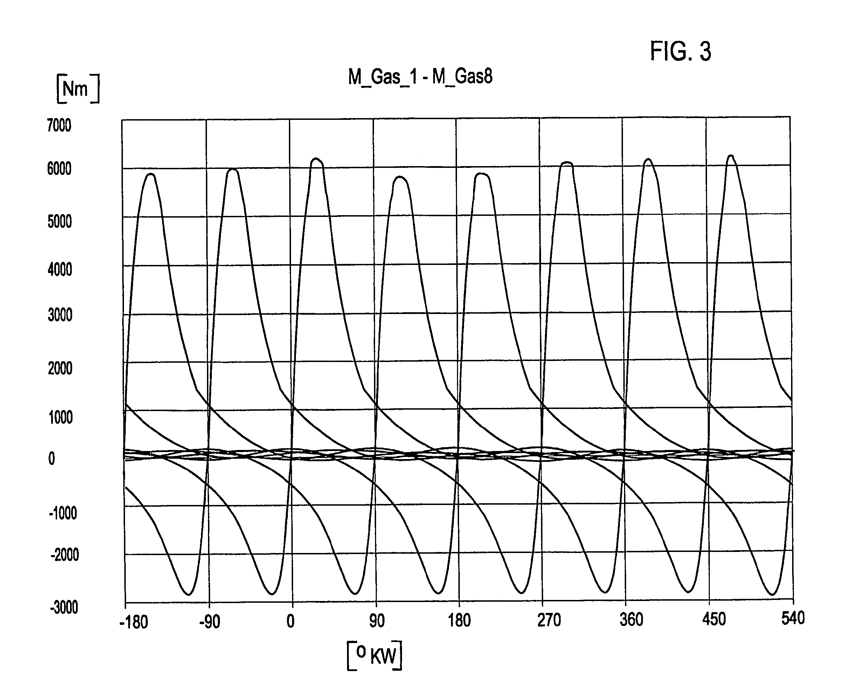

Werden die Parameter C und R als Mittelwerte über den gesamten Motorzyklus gesehen, ist das Zyklusintervall sinnvoll. Damit ergibt sich für den Mehrzylindermotor die folgende bevorzugte Einpassstrategie. Zur Veranschaulichung zeigt Fig. 3 die 8 Einzelzylindergaskraftdrehmomentenverläufe (M_Gas_1 ÷ M_Gas_8) eines 8-Zylinder-Nutzfahrzeugmotors bei Nennleistung über einem gesamten 4-Takt-Motorzyklus - hier beispielsweise von -180 bis 540 Grad Kurbelwinkel.

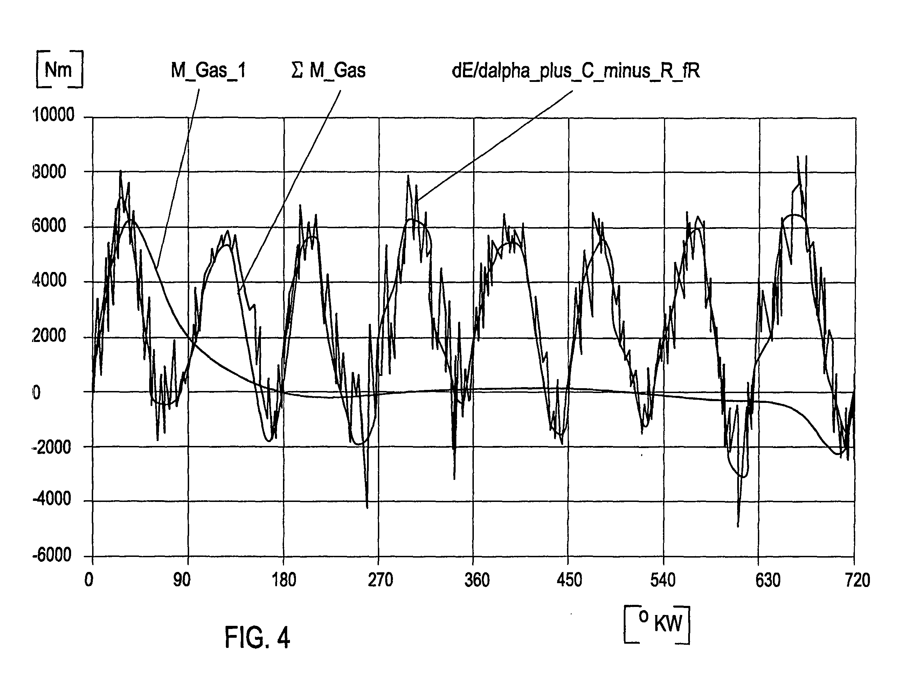

Fig. 4 zeigt den Gaskraftmomentenverlauf von Zylinder 1 (M_Gas_1) im Vergleich zum Summengaskraftmomentenverlauf (Summe_M_Gas, erster Term von Gleichung 4) und zum Verlauf des Energiepegelmoments ( dE/dalpha_plus_ C_minus_R_fR , $M_E$ nach Gleichung 3, vermehrt um das mittlere Lastmoment und vermindert um das Kolbenreibmoment - wieder über einem gesamten 4-Takt-Motorzyklus - hier beispielsweise von 0 bis 720 Grad Kurbelwinkel. Als Einpassintervall wird vorzugsweise jeweils ein gesamter Motorzyklus betrachtet, und zwar beispielsweise von a = -630 bis a = +89 Grad, wobei der Nullpunkt $\alpha=0$ im OT des betrachteten "aktuellen" Zylinders mit dem Index "j = 0" liegt. Mit diesem Intervall von beispielsweise -630 bis 89 Grad kann also sogar bei einem 8-Zylinder-Motor noch innerhalb eines Zündabstandes die gewünschte Einzelzylinderbewertung ($V_0$, $K_0$, $\Delta\alpha_0$) zeitgleich mit einer raschen Aktualisierung des mittleren Motorgesamtdrehmomentes (C) erfolgen.

Die folgenden Werte waren bei diesem Einpassvorgang vorgegeben:

$A_j \equiv A$
$S_j \equiv S$
$K_{-7}$ bis $K_{-1}$
$V_{-7}$ bis $V_{-1}$
$\Delta\alpha_{-7}$ bis $\Delta\alpha_{-1}$

Eingepasst werden C, $K_0$, $V_0$ und R, und zwar mit dem Ausgangswert von $\Delta\alpha_0$. Mit entsprechend ausreichender Rechenleistung kann auch $\Delta\alpha_0$ eingepasst werden, wobei der Einpassvorgang durch wiederholte Berechnung des Summenfehlerquadrates bei verschieden vorgegebenen Werten von $\Delta\alpha_0$ erfolgt. Als Startwert wird ein geeigneter Mittelwert der vergangenen Motorzyklen angesetzt, beispielsweise der Mittelwert der letzten 10 Zyklen für $\Delta\alpha$ vom betrachteten Zylinder mit "j = 0". $\Delta\alpha_0$ wird dann durch das Minimum im Ausgleichspolynom gefunden, das beispielsweise durch 5 Fehlerquadratwerte als Funktion von $\Delta\alpha_0$ gelegt wird.

Bei diesem zündabstandsweise überlappenden Einpassvorgang ist zu beachten, dass die Werte $K_{-7}$ und $K_{-6}$ eigentlich $K_{+1}$ und $K_{+2}$ heißen sollten, da sie den beginnenden Kompressionsverlauf der nachfolgenden Zylinder berücksichtigen.

Wenn K nicht ohnehin für alle Zylinder gleich gesetzt wird, wird dabei vorgeschlagen, zumindest für jeden einzelnen Zylinder die Werte $K_j$ über mehrere vergangene Motorzyklen zu mitteln und das jeweils einzupassende $K_0$ nur in geringen Grenzen um diesen Wert zu variieren, um ein stabiles Modell zu erhalten. Gleiches gilt für den Kolbenreibungsfaktor R.

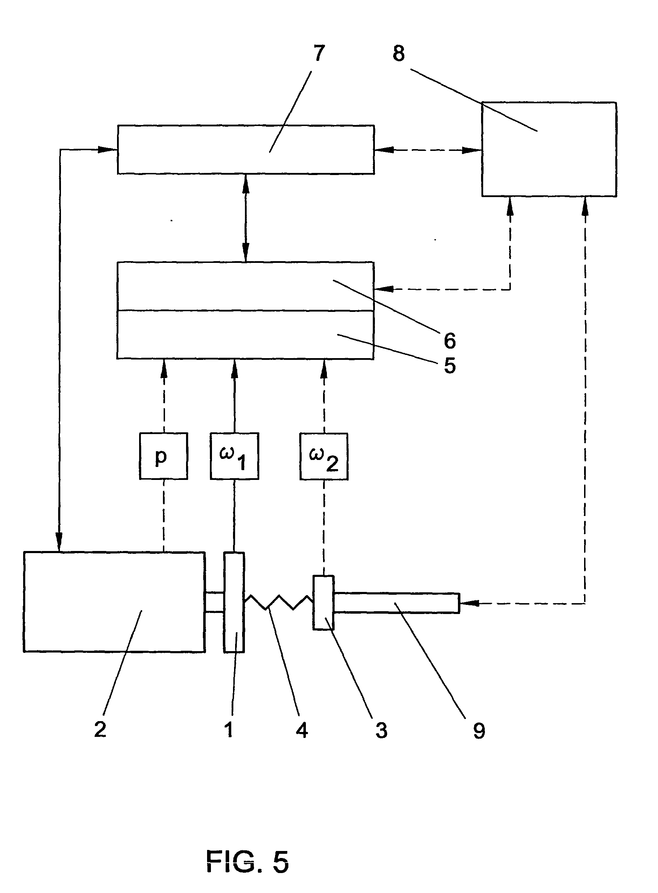

Fig. 5 zeigt beispielhaft eine bevorzugte Ausgestaltung einer erfindungsgemäßen Vorrichtung. Am Schwungrad (1) der Brennkraftmaschine (2) wird eine erste momentane Drehwinkelgeschwindigkeit $\omega_1$ gemessen. Optional wird am abtriebsseitigen Ende (3) der hier als drehelastische Feder eingezeichneten Kupplung (4) eine zweite momentane Drehwinkelgeschwindigkeit $\omega_2$ und mithilfe eines an einem Zylinder der Brennkraftmaschine angeordneten Zylinderdrucksensors wird optional der momentane Brennraumdruck p dieses Zylinders gemessen. Die Messsignale dieser Sensoren werden mit hoher Datenrate einer Auswerteeinheit (5) zur Verfügung gestellt, die gemäß dem hier vorgestellten Verfahren die signifikanten Parameter ermittelt. Die angeschlossene Bereitstellungseinheit (6) sendet diese Ergebnisse mit geringerer Datenrate an die Motorsteuerung oder ECU (7). Von der Motorsteuerung wurden in einer Konditionierungsphase die für die Auswertung erforderlichen Systemparameter an die Bereitstellungseinheit (6) übermittelt und gegebenenfalls aktualisiert. Die Motorsteuerung wirkt außerdem und vor allem auf die Brennkraftmaschine, um den jeweils gewünschten Betrieb aufrecht zu halten bzw. einzuregeln.

Eingezeichnet ist weiters ein Antriebstrangmanagementsystem (8), das mit dem Abtrieb (9), mit der ECU (7) und mit der Bereitstellungseinheit (6) in Verbindung steht. Die genaue Kenntnis des aktuellen Motordrehmoments hilft insbesondere auch dem Antriebstrangmanagementsystem (8) als wichtige Eingangsgröße, die optional genutzt werden kann.

**Patentansprüche**

1. Verfahren zur Diagnose von Brennkraftmaschinen, insbesonders von mehrzylindrigen Brennkraftmaschinen, wobei aus einer fortlaufenden Messung der kurbelwinkelabhängigen Drehgeschwindigkeit an einem Bauteil der Brennkraftmaschine modellgestützt der Energiepegelverlauf ermittelt und zur Einzelzylinder-Beurteilung herangezogen wird, **dadurch gekennzeichnet, dass** aus zumindest einem Einzelzylinder-Momentverlauf der Gesamt-Gaskraftdrehmomentverlauf als Funktion zylinderspezifischer Parameter zumindest näherungsweise über einen bestimmten Kurbelwinkelbereich modelliert und unter Variation zumindest eines Teils der zylinderspezifischen Parameter dem Verlauf des aus dem Energiepegelverlauf ermittelten Energiepegelmomentes in diesem Bereich angepasst wird, und dass mit Hilfe der aus dieser Anpassung erhaltenen zylinderspezifischen Parameter der der Modellierung zugrundegelegte Einzelzylinder-Momentverlauf korrigiert und zur Einzelzylinder-Beurteilung herangezogen wird.

2. Verfahren nach Anspruch 1, **dadurch gekennzeichnet, dass** der Einzelzylinder-Momentverlauf ohne weitere Messung an der jeweiligen Brennkraftmaschine geschätzt bzw. aus den Motordaten modelliert wird.

3. Verfahren nach Anspruch 1, **dadurch gekennzeichnet, dass** der Einzelzylinder-Momentverlauf aus einem an der jeweiligen Brennkraftmaschine, vorzugsweise an einem einzelnen Zylinder, aufgenommenen Einzelzylinder-Brennraumdruckverlauf, bzw. dem Verlauf einer dazu proportionalen Größe, unter Einbeziehung der Kurbelgeometrie ermittelt wird.

4. Verfahren nach zumindest einem der Ansprüche 1 bis 3, **dadurch gekennzeichnet, dass** das Energiepegelmoment einerseits aus der Ableitung des Energiepegelverlaufs und andererseits als Funktion des mittleren effektiven Lastmomentes C, des Gaskraftdrehmomentes $M_{Gas}$ im Ansaug- und Auspufftakt und eines Reibmomentes modelliert wird, wobei in einem bestimmten Kurbelwinkelbereich durch Variation von mindestens einem der Modellparameter an den für diesen Bereich ermittelten Verlauf des Energiepegelmomentes bestmöglich angepasst wird.

5. Verfahren nach zumindest einem der Ansprüche 1 bis 4, **dadurch gekennzeichnet, dass** zur Berücksichtigung des Einflusses von Torsionsschwingungen und /oder Lastschwankungen des Antriebstranges abtriebsseitig eine weitere kurbelwinkelabhängige Drehgeschwindigkeit an einem elastisch mit dem einen Bauteil verbundenen weiteren Bauteil der Brennkraftmaschine ermittelt, bzw. eine separate, kurbelwinkelabhängige Momentmessung abtriebsseitig am Kurbeltrieb vorgenommen, und bei der Bestimmung des Energiepegelverlaufes berücksichtigt wird.

6. Verfahren zur Steuerung von Brennkraftmaschinen, insbesonders zur on-board Steuerung von als Antriebsmotor in einem Kraftfahrzeug eingebauten Mehrzylinder-Brennkraftmaschinen, wobei mit den mittels eines Verfahren nach zumindest einem der Ansprüche 1 bis 5 erhaltenen Parametern Kenngrößen zur Einzelzylinder-Beurteilung ermittelt und an eine on-board Motorsteuerung übertragen werden.

7. Verfahren nach Anspruch 6, **dadurch gekennzeichnet, dass** die Aufnahme bzw. Ermittlung der Drehgeschwindigkeit(en) und gegebenenfalls des Einzelzylinder-Brennraumdruckverlaufes bzw. des Verlaufes einer dazu proportionalen Größe unabhängig von der oder nur parametriert durch die Motorsteuerung zeitlich hoch aufgelöst erfolgt, wogegen die Übertragung der so ermittelten Messgrößen an die Motorsteuerung mit niedrigerer Datenrate erfolgt.

8. Vorrichtung zur Diagnose von Brennkraftmaschinen, insbesonders von mehrzylindrigen Brennkraftmaschinen, mit zumindest einer Messeinheit zur fortlaufenden Messung der kurbelwinkelabhängigen Drehgeschwindigkeit an zumindest einem Bauteil der Brennkraftmaschine, einer Bereitstellungseinheit zur Bereitstellung eines parameterabhängigen Einzelzylinder-Momentverlaufes, und einer Auswerteeinheit zur modellgestützten Ermittlung des Energiepegelverlaufes aus der (den) gemessenen Drehgeschwindigkeit(en) sowie zur Anpassung des aus den Einzelzylinder-Momentverläufen zusammengesetzten Gesamt-Gaskraftdrehmomentverlaufs unter Variation der Parameter an den Verlauf des Energiepegelmomentes, wobei die aus dieser Anpassung resultierenden Parameter oder die mit Hilfe dieser Parameter korrigierten Einzelzylinder-Momente von der Auswerteeinheit als Einzelzylinder-Diagnosegrößen angezeigt oder bereitgestellt werden.

9. Vorrichtung nach Anspruch 8, **dadurch gekennzeichnet, dass** die Bereitstellungseinheit mit einer Sensoreinheit zur direkten Ermittlung des Brennraumdruckverlaufes bzw. des Verlaufes einer dazu proportionalen Größe zumindest eines Zylinders der jeweiligen Brennkraftmaschine verbunden ist.

10. Vorrichtung nach Anspruch 9, **dadurch gekennzeichnet, dass** die Sensoreinheit mit der (den) Messeinheit(en) für die Drehgeschwindigkeit(en) verbunden ist und zumindest einen Teil der Auswerteelektronik der Auswerteeinheit umfasst.

11. Vorrichtung nach einem der Ansprüche 9 oder 10 zur Durchführung des Verfahrens nach Anspruch 7, wobei die Sensoreinheit an den oder in der Nähe der Sensoren an der Brennkraftmaschine angeordnet und über eine Übertragungsleitung mit niedriger Datenrate mit der Fahrzeugsteuerung bzw. mit der on-board Motorsteuerung (ECU) verbunden ist.

## Claims

1. Method for diagnosing internal-combustion engines, in particular, multiple-cylinder internal-combustion engines, wherein the energy-level characteristic of one component of the internal-combustion engine is determined in a model-assisted manner from a continuous measurement of the crank-angle-dependent rotational speed and used for an individual-cylinder evaluation,
**characterised in that**
the total gas-power torque characteristic is modelled at least approximately as a function of cylinder-specific parameters over a given crank-angle range from at least one individual-cylinder moment characteristic and adapted, by variation of at least some of the cylinder-specific parameters, to the characteristic of the energy-level moment determined from the energy-level characteristic within this range, and that, using the cylinder-specific parameters obtained from this adaptation, the individual-cylinder moment characteristic, on which the modelling was based, is corrected and used for the individual-cylinder evaluation.

2. Method according to claim 1,
**characterised in that**
the individual-cylinder moment characteristic is either estimated without further measurement of the respective internal-combustion engine and/or modelled from the engine data.

3. Method according to claim 1,
**characterised in that**
the individual-cylinder moment characteristic is determined from an individual-cylinder internal-combustion-chamber pressure characteristic recorded in the respective internal-combustion engine, preferably on an individual cylinder, and/or from the characteristic of a value proportional to the latter with the inclusion of the crank geometry.

4. Method according to at least one of claims 1 to 3,
**characterised in that**
the energy-level moment is modelled, on the one hand, from the derivation of the energy-level characteristic and, on the other hand, as a function of the mean effective-load moment C, the gas-power torque $M_{Gas}$ in the intake and exhaust stroke and a frictional moment, wherein, within a given crank-angle range, the best possible adaptation to the characteristic of the energy-level moment determined for this range is implemented by variation of at least one of the modelling parameters.

5. Method according to at least one of claims 1 to 4,
**characterised in that**,
in order to include the influence of torsional vibrations and/or load fluctuations at the drive side of the drive train, either a further crank-angle-dependent rotational speed is determined on a further component of the internal-combustion engine connected in a resilient manner to the first component, and/or a separate crank--angle-dependent moment measurement is implemented on the drive side of the crank drive and included in the determination of the energy-level characteristic.

6.  Method for controlling internal-combustion engines, especially for the on-board control of multiple-cylinder internal-combustion engines integrated as a drive engine in a motor vehicle, wherein values for the individual-cylinder evaluation are determined using the parameters obtained by means of a method according to at least one of claims 1 to 5 and transmitted to an on-board engine-control unit.

7.  Method according to claim 6,
    **characterised in that**
    the recording and/or determination of the rotational speed(s) and optionally of the individual-cylinder combustion-chamber pressure characteristic and/or of the characteristic of a parameter proportional to the latter is implemented independently of the engine-control unit or only parameterised by the engine-control unit with a high time-resolution, while the transmission of the measured values determined in this manner to the engine control unit takes piece at a slower data rate.

8.  Device for diagnosing internal-combustion engines, in particular, multiple-cylinder internal-combustion engines, with at least one measuring unit for the continuous measurement of the crank-angle-dependent rotational speed of at least one component of the internal-combustion engine, with a delivery unit for the delivery of a parameter-dependent individual-cylinder moment characteristic, and with an evaluation unit for the model-assisted determination of the energy-level characteristic from the measured rotational speed(s) and for adapting the total gas-power torque characteristic composed of the individual-cylinder moment characteristics to the characteristic of the energy-level moment by variation of the parameters, wherein the parameters resulting from this adaptation or the individual-cylinder moments corrected using these parameters are displayed or delivered by the evaluation unit as individual-cylinder diagnostic values.

9.  Device according to claim 8,
    **characterised in that**
    the delivery unit is connected to a sensor unit for the direct determination of the combustion-chamber pressure characteristic and/or the characteristic of a parameter proportional to the latter for at least one cylinder of the respective internal-combustion engine.

10. Device according to claim 9,
    **characterised in that**
    the sensor unit is connected to the measurement unit(s) for the rotational speed(s) and provides at least one part of the electronic evaluation system of the evaluation unit.

11. Device according to any one of claims 9 or 10 for the implementation of the method according to claim 7, wherein the sensor unit is arranged on the sensors or close to the sensors on the internal-combustion engine and connected via a transmission line with a slow data rate to the vehicle-control unit or respectively to the on-board engine-control unit (ECU).

**Revendications**

1.  Procédé de diagnostic de moteurs à combustion interne, en particulier de moteurs à combustion interne à plusieurs cylindres, dans lequel on détermine la variation du niveau d'énergie en s'appuyant sur un modèle à partir de la mesure continue sur un composant du moteur à combustion de la vitesse de rotation en fonction de l'angle du vilebrequin, et on en tire l'évaluation d'un cylindre individuel, **caractérisé en ce que**, à partir d'au moins une variation du couple du cylindre individuel, on modélise la variation des couples de torsion correspondant à la force totale des gaz en fonction de paramètres spécifiques au cylindre au moins approximativement sur une plage déterminée de l'angle du vilebrequin et, en faisant varier au moins une partie des paramètres spécifiques au cylindre, on adapte la variation du couple du niveau d'énergie déterminée à partir de la variation du niveau d'énergie dans cette plage, et **en ce que**, à l'aide des paramètres spécifiques au cylindre obtenus par cette adaptation, on corrige la variation des couples du cylindre individuel qui est à la base de la modélisation, et on en tire l'évaluation des cylindres individuels.

2.  Procédé selon la revendication 1, **caractérisé en ce que** la variation du couple du cylindre individuel est évaluée sans autre mesure sur le moteur à combustion interne respectif, ou est modélisée à partir de données sur le moteur.

3.  Procédé selon la revendication 1, **caractérisé en ce que** la variation du couple du cylindre individuel est déterminée à partir d'une variation de pression de la chambre de combustion des cylindres individuels reçue sur le moteur à combustion interne respectif, de préférence sur un cylindre individuel, ou de la variation d'une grandeur qui lui est proportionnelle en intégrant la géométrie du vilebrequin.

4. Procédé selon au moins l'une des revendications 1 à 3, **caractérisé en ce que** le couple de niveau d'énergie est modélisé, d'une part, à partir de la dérivée de la variation du niveau d'énergie et, d'aute part, en fonction du couple de charge efficace moyen C, du couple de la force des gaz MGaz dans le cycle d'aspiration et d'échappement et d'un couple de frottement, de sorte que, dans une certaine plage d'angles du vilebrequin, par variation d'au moins l'un des paramètres de modélisation, on s'adapte le mieux possible à la variation du couple de niveau d'énergie déterminé pour cette plage.

5. Procédé selon au moins l'une des revendications 1 à 4, **caractérisé en ce que**, pour tenir compte de l'influence des oscillations de torsion et/ou des fluctuations de charge de la chaîne de transmission côté sortie, on détermine une autre vitesse de rotation en fonction de l'angle du vilebrequin sur un autre composant du moteur à combustion interne relié élastiquement au premier composant, ou l'on effectue une mesure séparée du couple en fonction de l'angle du vilebrequin côté sortie sur la transmission du vilebrequin, et on en tient compte dans la détermination de la variation du niveau d'énergie.

6. Procédé pour commander des moteurs à combustion interne, en particulier pour la commande embarquée de moteurs à combustion interne à plusieurs cylindres incorporés comme moteur d'entraînement à un véhicule à moteur, dans lequel on détermine, avec les paramètres obtenus au moyen d'un procédé selon au moins l'une des revendications 1 à 5, des grandeurs caractéristiques pour l'évaluation des cylindres individuels qui sont transférés à une commande de moteur embarquée.

7. Procédé selon la revendication 6, **caractérisé en ce que** la réception ou la détermination de la ou des vitesses de rotation, et le cas échéant de la variation de pression de la chambre de combustion des cylindres individuels ou de la variation d' une grandeur qui lui est proportionnelle, se fait indépendamment de la commande du moteur ou seulement par paramétrage par la commande du moteur avec une résolution élevée dans le temps, tandis que, par contre, la transmission des grandeurs de mesure ainsi obtenues à la commande du moteur est réalisée à des vitesses de données plus faibles.

8. Dispositif pour le diagnostic de moteurs à combustion interne, en particulier de moteurs à combustion interne à plusieurs cylindres, comprenant au moins une unité de mesure pour la mesure en continu de la vitesse de rotation en fonction de l'angle du vilebrequin sur au moins un composant du moteur à combustion interne, une unité de préparation pour préparer une variation de couple des cylindres individuels en fonction de paramètres, et une unité d'exploitation pour déterminer, en s'appuyant sur un modèle, la variation du niveau d'énergie à partir de la ou des vitesses de rotation mesurées ainsi que pour l'adaptation de la variation du couple de torsion de la force totale des gaz composée des variations du couple des cylindres individuels en tenant compte de la variation des paramètres sur l'évolution du couple du niveau d'énergie, les paramètres résultant de cette adaptation ou les couples des cylindres individuels corrigés de ces paramètres étant indiqués ou préparés par l'unité d'exploitation sous la forme de grandeurs de diagnostic des cylindres individuels.

9. Dispositif selon la revendication 8, **caractérisé en ce que** l'unité de préparation est reliée à une unité de détection pour déterminer directement la variation de pression de la chambre de combustion ou la variation d'une grandeur qui lui est proportionnelle d'au moins un cylindre du moteur à combustion interne respectif.

10. Dispositif selon la revendication 9, **caractérisé en ce que** l'unité de détection est reliée à la ou aux unités de mesure pour la ou les vitesses de rotation, et comprend au moins une partie de l'électronique d'exploitation de l'unité d'exploitation.

11. Dispositif selon l'une des revendications 9 ou 10 pour mettre en oeuvre le procédé selon la revendication 7, dans lequel l'unité de détection est aménagée sur ou au voisinage des capteurs sur le moteur à combustion interne, et est reliée à la commande du véhicule ou à la commande de moteur embarquée (ECU) via une ligne de transmission à une faible vitesse de données.

**FIG. 1a**

**FIG. 1b**

**FIG. 1c**

M_Gas_minus_C_plusRfR

dE_d_alpha_

C= 328 Nm
R= 33,4 Nm

**FIG. 1d**

V= 3845 Nm

A= 172 Nm      S= 130 Nm      K= 2728 Nm

delta_alpha=0

FIG. 2a

FIG. 2b

FIG. 2c

FIG. 2d

FIG. 2e

FIG. 2f

FIG. 3

M_Gas_1 - M_Gas8

FIG. 4

EP 1 058 108 B1

**FIG. 5**